# EUROPÄISCHE PATENTSCHRIFT

(11) **EP 2 885 181 B1**
(45) Veröffentlichungstag und Bekanntmachung des Hinweises auf die Patenterteilung: **07.04.2021**
(21) Anmeldenummer: 13741721.8
(22) Anmeldetag: 23.07.2013
(51) Int. Cl.: B60W 30/06, B60W 30/095, B60W 50/14, G01S 13/93, G01S 15/931, G01S 7/527, G01S 13/86, G01S 13/931

(54) **VERFAHREN ZUR ÜBERWACHUNG EINES TOTEN WINKELS UND FAHRASSISTENZSYSTEM**
METHOD FOR MONITORING A BLIND SPOT AND DRIVING ASSISTANCE SYSTEM
PROCÉDÉ DE SURVEILLANCE D'ANGLE MORT ET SYSTÈME D'AIDE À LA CONDUITE

(30) Priorität: 16.08.2012 DE 102012214547
(43) Veröffentlichungstag der Anmeldung: 24.06.2015
(73) Patentinhaber: Robert Bosch GmbH, 70442 Stuttgart (DE)
(72) Erfinder: SCHOENHERR, Michael, 71272 Renningen-Malmsheim (DE); CAI, Jing, Suzhou 215021 (CN)
(86) Internationale Anmeldenummer: PCT/EP2013/065473
(87) Internationale Veröffentlichungsnummer: WO 2014/026829

(56) Entgegenhaltungen:
- EP-A1- 1 990 787
- EP-A2- 0 936 471
- DE-A1- 10 323 144

## Beschreibung

### Stand der Technik

Die Erfindung betrifft ein Verfahren zur Überwachung eines toten Winkels eines Fahrzeugs.

Gegenstand der vorliegenden Erfindung sind auch ein Computerprogramm und ein Fahrassistenzsystem.

DE 10 2010 018 349 A1 offenbart ein Verfahren und eine Vorrichtung zur Detektion eines Objektes in einer Umgebung eines Fahrzeugs, bei welchem Abstandssensoren, insbesondere Ultraschallsensoren eingesetzt werden. Die Ultraschallsensoren sind dabei im Frontbereich und im Heckbereich angeordnet und zusätzlich zur Überwachung der Seite auch an der Seite des Fahrzeugs. Die Sensoren können sowohl als Sensoren für ein Einparkunterstützungssystem als auch für ein Totwinkelerkennungssystem genutzt werden.

DE 103 21 904 A1 und DE 103 07 229 A1 zeigen Vorrichtungen und Verfahren zur Überwachung eines Nahbereichs eines Kraftfahrzeugs zur Vermeidung von Kollisionen, bei denen seitlich am Fahrzeug Sensoren angebracht sind, um den Bereich seitlich neben dem Fahrzeug zu überwachen. Um Objekte im toten Winkel des Kraftfahrzeugs zu erfassen, werden Objekte, die erfasst worden sind, lokalisiert und deren Position gespeichert, damit die Objekte auch zu einem Zeitpunkt, zu dem diese nicht mehr vom Sensor erfasst werden, weiterhin als mögliches Hindernis im System hinterlegt sind. Dies dient insbesondere dazu, die Objekte auch dann zu erfassen, wenn diese im toten Winkel des Fahrzeugs liegen.

DE 100 37 129 A1 zeigt ein Einparksystem, bei dem die Umgebung des Kraftfahrzeugs mit Hilfe optischer Sensoren, insbesondere mit Kameras erfasst wird. Hierzu werden die Einzelbilder der Kameras genutzt, um ein Bild der Umgebung zu erzeugen und dies dem Fahrer in Vogelperspektive darstellen zu können. Dem Fahrer werden auch Objekte angezeigt, die sich in einem toten Winkel befinden.

DE 103 23 144 A1 offenbart ein Verfahren zur Überwachung eines toten Winkels eines Fahrzeugs, wobei ein Parkassistenzsystem mittels einer Umgebungserfassungseinrichtung eine Umgebung des Fahrzeugs erfasst und in der erfassten Umgebung Objekte ermittelt werden, wobei bei einem ermittelten Objekt überprüft wird, ob es sich in einem toten Winkel befindet, und eine Aktion ausgelöst wird, wenn sich das ermittelte Objekt in dem toten Winkel befindet, wobei das Parkassistenzsystem unterhalb einer bestimmten Geschwindigkeit aktiv und oberhalb der bestimmten Geschwindigkeit inaktiv ist, wobei ein komplementäres Totwinkelüberwachungssystem dann aktiv ist, wenn das Parkassistenzsystem inaktiv ist, so dass eine Totwinkelüberwachung stattfindet.

### Offenbarung der Erfindung

### Vorteile der Erfindung

Bei dem erfindungsgemäßen Verfahren zur Überwachung eines toten Winkels eines Fahrzeugs mit den Merkmalen des unabhängigen Anspruchs 1 ist vorgesehen, dass ein Parkassistenzsystem mittels einer Umgebungserfassungseinrichtung eine Umgebung des Fahrzeugs erfasst und in der erfassten Umgebung Objekte ermittelt, wobei bei einem ermittelten Objekt überprüft wird, ob es sich in einem toten Winkel befindet, und eine Aktion ausgelöst wird, wenn sich das ermittelte Objekt in dem toten Winkel befindet.

Das erfindungsgemäße Verfahren hat den Vorteil, dass eine Totwinkelüberwachung mit Hilfe einer bereits vorhandenen Einparkhilfe realisiert wird. Somit kann die Totwinkelüberwachung bei gleichzeitiger Aktivierung der Einparkhilfe in einem Geschwindigkeitsbereich realisiert werden, welcher bisher nur für die Einparkhilfe vorgesehen war. In diesem Geschwindigkeitsbereich war die Totwinkelüberwachung bisher nur möglich, wenn die Einparkhilfe deaktiviert war. Die Überwachung des toten Winkels wird durch die vom Parkassistenzsystem verwendete Umgebungserfassungseinrichtung und zugehörige Objektdetektionsmodule realisiert. Somit werden keine zusätzlichen Sensoren für die Überwachung des toten Winkels benötigt. Dadurch, dass bei dem Parkassistenzsystem Objekte erfasst werden, die sich seitlich und auch seitlich hinter dem Fahrzeug befinden, werden gleichzeitig Objekte im toten Winkel erfasst. Diese Information lässt sich dadurch verarbeiten, dass eine Aktion ausgelöst wird, wenn sich das ermittelte Objekt in dem toten Winkel befindet. Der tote Winkel umfasst dabei insbesondere einen Bereich, welcher vom Fahrer aus der gewöhnlichen Fahrposition heraus durch seinen durch die Windschutzscheibe auf das Verkehrsgeschehen gerichteten Blick und durch Rück- und Seitenspiegel nicht erfassbar ist.

Die ausgelöste Aktion umfasst beispielsweise eine Abgabe eines akustischen und/oder optischen und/oder haptischen Signals. Das akustische Signal kann beispielsweise ein dauerhafter oder periodisch wiederkehrender Piepton sein, wobei ein Sender des Piepsignals im Fahrzeuginneren angeordnet sein kann, und/oder eine Sprachnachricht, welche beispielsweise über die Radioboxen oder über ein mobiles Gerät, wie etwa ein Smartphone kommuniziert wird. Ein optisches Signal kann beispielsweise eine Einblendung eines Zeichens oder einer Nachricht auf einem Headup-Display oder auf einem Headdown-Display oder auf einem mobilen Gerät, wie etwa auf einem Smartphone umfassen. Die Einblendung kann eine Hervorhebung, beispielsweise eine farbliche Hervorhebung oder ein Blinken des erkannten Objekts auf einem dargestellten Umgebungsbild, etwa ein Kamerabild umfassen und/oder ein farblich hervorgehobenes und/oder blinkendes Warnsymbol, beispielsweise ein Icon auf einer Anzeige. Das haptische Signal kann eine Vibration umfassen, die gegebenenfalls wiederholt in einem Zeitraum von wenigen Sekunden auf das Lenkrad oder auf ein mobiles Gerät wirkt und die vom Fahrer spürbar ist. Haptische Signale werden bevorzugt von aussagekräftigen optischen oder akustischen Signalen begleitet.

Bevorzugt wird die Aktion dann ausgelöst, wenn sich das ermittelte Objekt in dem toten Winkel befindet und wenn zusätzlich eine Lenkbewegung des Fahrzeugs in Richtung auf das im toten Winkel befindliche Objekt erfolgt.

Nach der Erfindung ist ein komplementäres Totwinkelüberwachungssystem dann aktiv, wenn das Parkassistenzsystem inaktiv ist. Als das komplementäre Totwinkelüberwachungssystem wird im Rahmen der Erfindung ein gewöhnliches serienmäßig verbautes Totwinkelüberwachungssystem bezeichnet, welches oftmals eine eigene Sensorik und zugehörige Objekterkennung aufweist. Das komplementäre Totwinkelüberwachungssystem ist nicht gleichzeitig mit der Einparkhilfe aktiv. Das komplementäre Totwinkelüberwachungssystem erfasst mittels derselben Umgebungserfassungseinrichtung wie das Parkassistenzsystem, eine Umgebung des Fahrzeugs, ermittelt in der erfassten Umgebung Objekte, überprüft bei einem ermittelten Objekt, ob es sich in einem toten Winkel befindet und löst dann eine der oben beschriebenen Aktionen aus, wenn sich das ermittelte Objekt in dem toten Winkel befindet. Das komplementäre Totwinkelüberwachungssystem arbeitet unter Bedingungen, d.h. unter Systemparametern, welche sich vom Parkassistenzsystem unterscheiden. Das System wird also kompatibel zu dem komplementären Totwinkelüberwachungssystem ausgelegt, d. h. es wird durch das komplementäre Totwinkelüberwachungssystem vorteilhaft ergänzt.

Die Totwinkelüberwachung findet ständig statt. Für niedrige Geschwindigkeiten sind beide Funktionalitäten, die Totwinkelüberwachung und die Einparkhilfe, alleine durch Sensorik und Objekterkennung des Parkassistenten vorhanden, und für hohe Geschwindigkeiten erfolgt die Totwinkelüberwachung über das komplementäre Totwinkelüberwachungssystem.

Dabei kann vorgesehen sein, dass das Parkassistenzsystem ein Signal bereitstellt, welches anzeigt, ob das Parkassistenzsystem aktiv ist oder inaktiv ist. Das komplementäre Totwinkelüberwachungssystem kann das Signal empfangen und schaltet sich inaktiv, sobald das Parkassistenzsystem aktiv ist. Das komplementäre Totwinkelüberwachungssystem schaltet sich aktiv, sobald das Parkassistenzsystem inaktiv ist.

Nach der Erfindung ist das Parkassistenzsystem unterhalb einer bestimmten Geschwindigkeit aktiv und oberhalb der bestimmten Geschwindigkeit inaktiv. Die bestimmte Geschwindigkeit ist eine beliebige definierte Geschwindigkeit bis maximal 20 km/h, beispielsweise 6 km/h, 10 km/h, 15 km/h, bevorzugt 18 km/h oder 20 km/h. Das komplementäre Totwinkelüberwachungssystem arbeitet in dem Fall oberhalb der bestimmten Geschwindigkeit, beispielsweise oberhalb von 6 km/h, 10 km/h, 15 km/h, 18 km/h bzw. 20 km/h. Unterhalb der bestimmten Geschwindigkeit finden die Totwinkelüberwachung und die Parkassistenz statt. Oberhalb der bestimmten Geschwindigkeit findet die Totwinkelüberwachung ebenfalls statt.

Zusätzlich hierzu kann das Parkassistenzsystem beispielsweise von einem Insassen, etwa dem Fahrer selbst aktiviert werden. Es kann auch automatisch ortsbezogen aktiviert werden, beispielsweise wenn ein GPS-System zur Verfügung steht und das Parkassistenzsystem feststellt, dass sich das Fahrzeug in der Nähe einer Heimatgarage oder beispielsweise in der Nähe eines Parkhauses befindet. Auch in diesen Fällen wird das komplementäre Totwinkelüberwachungssystem dann aktiv, wenn das manuell oder ortsbezogen aktivierbare Parkassistenzsystem nicht aktiviert ist.

Nach der Erfindung wird ein in der erfassten Umgebung ermitteltes Objekt einem virtuellen Objekt zugeordnet. Das Parkassistenzsystem weist in der erfassten Umgebung ermittelten Objekten Koordinaten zu. Dabei wird dem virtuellen Objekt außerdem zugeordnet, dass es sich in einem toten Winkel befindet oder befunden hat. Nach einer weiteren Ausführungsform wird dem virtuellen Objekt zugeordnet, wie lange es sich in einem toten Winkel befindet oder befunden hat. Nach einer weiteren Ausführungsform wird bei dem virtuellen Objekt prädiziert, wann es sich in einem toten Winkel befinden wird oder mit welcher Wahrscheinlichkeit es sich wann in einem toten Winkel befinden könnte.

Bei der Ermittlung der Objekte wird eine Schwellwertkurve verwendet, welche eine Bodenechosignalunterdrückung bereitstellt. Die Schwellwertkurve kann beispielsweise eine so genannte Hüllkurve von Bodenechosignalen sein, welche auf Basis eines in der tatsächlichen Situation gemessenen Bodenechos festgelegt wird. Dabei werden Empfangswellenpulse, welche unterhalb der Schwellwertkurve liegen, nicht als Reflexionsquellen registriert. Empfangswellenpulse, welche oberhalb der Schwellwertkurve liegen, werden als Reflexionsquellen identifiziert. Die Schwellwertkurve definiert die Empfindlichkeit des Ultraschallsystems. Virtuelle Objekte werden nur für solche Empfangswellenpulse angelegt, welche als Reflexionsquellen identifiziert wurden.

Beim komplementären Totwinkelüberwachungssystem wird hingegen eine Schwellwertkurve bei der Ermittlung der Objekte verwendet, die eine effektive Rauschunterdrückung bereitstellt. In Situationen, wenn das Parkassistenzsystem nicht aktiv ist, d. h. beispielsweise bei Geschwindigkeiten oberhalb von 20 km/h, ist das Bodenechosignal nicht von Belang. Bei diesen Geschwindigkeiten ist akustisches Rauschen kritisch, welches über die Schwellwertkurve herausgefiltert wird.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrassistenzsystems oder eines Subsystems hiervon in einem Fahrzeug handeln oder um eine Applikation für Fahrassistenzfunktionen, welche auf einem Smartphone ausführbar ist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-Rom, DVD oder einem USB-Stick. Zusätzlich oder alternativ kann das Computerprogramm auf einer Computereinrichtung wie etwa auf einem Server oder einem Cloud-System zum Herunterladen bereitgestellt werden, z.B. über ein Datennetzwerk wie das Internet oder eine Kommunikationsverbindung wie etwa eine Telefonleitung oder eine drahtlose Verbindung.

Nach einem weiteren Aspekt der Erfindung wird ein Fahrassistenzsystem mit den Merkmalen des Anspruchs 4 vorgeschlagen.

Das Fahrassistenzsystem kann außerdem ein Seitenraumüberwachungssystem umfassen oder mit diesem funktional zusammenwirken. Das Seitenraumüberwachungssystem stellt beispielsweise Informationen über Objekte in der Umgebung eines Fahrzeugs bereit, welche sich in einem seitlichen Fahrzeugbereich außerhalb des Erfassungsbereichs der frontseitigen und heckseitigen Ultraschallsensoren befinden und extrapoliert hierzu die Trajektorien der erfassten Objekte in den seitlichen Bereich des Fahrzeugs.

### Kurze Beschreibung der Zeichnungen

Ausführungsbeispiele der Erfindung sind in den Zeichnungen dargestellt und in der nachfolgenden Beschreibung näher erläutert.

Es zeigen
- Fig. 1: eine schematische Darstellung funktionaler Komponenten eines Fahrassistenzsystems,
- Fig. 2: ein Flussdiagramm für eine Datenverarbeitung nach dem Stand der Technik und
- Fig. 3: ein Flussdiagramm einer erfindungsgemäßen Datenverarbeitung.

### Ausführungsformen der Erfindung

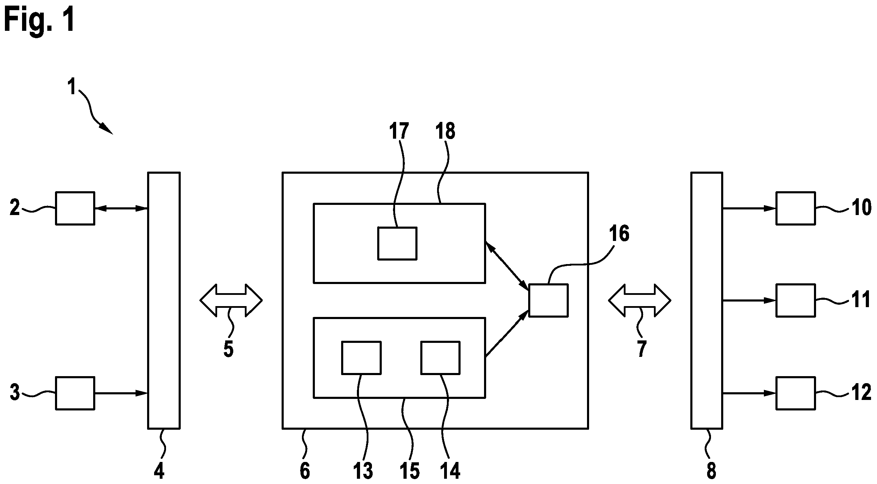

Fig. 1 zeigt eine schematische Darstellung funktionaler Komponenten eines Fahrassistenzsystems 1 gemäß der vorliegenden Erfindung. Das Fahrassistenzsystem 1 ist dazu ausgebildet, einen toten Winkel eines Fahrzeugs zu überwachen und eine Aktion auszulösen, wenn sich ein von einer Umgebungserfassungseinrichtung ermitteltes Objekt in einem toten Winkel befindet.

Das Fahrassistenzsystem 1 umfasst hierzu zumindest eine Umgebungserfassungseinrichtung 2, welche bevorzugt mehrere Sende-/Empfangseinheiten aufweist. Die Umgebungserfassungseinrichtung 2 ist bevorzugt ein Ultraschallsystem, kann aber auch Radarsensoren, Infrarotsensoren, Kameras und/oder Lidarsensoren umfassen, deren Informationen mit den Informationen des Ultraschallsystems fusioniert werden können oder etwa zur Plausibilisierung dienen. Die eingesetzten Sende-/Empfangseinheiten basieren dabei beispielsweise auf einem Pulsecho-Verfahren. In diesem Betrieb sendet die Sende-/Empfangseinheit einen Wellenpuls aus und misst die durch ein Objekt hervorgerufenes Echosignal des Wellenpulses, den Empfangswellenpuls.

Das Fahrassistenzsystem 1 umfasst außerdem eine Fahrzeugdatensensorik 3, welche beispielsweise Daten über die Fahrzeuggeschwindigkeit und/oder Odometriedaten bereitstellt. Die Signale der Umgebungserfassungseinrichtung 2 und der Fahrzeugdatensensorik 3 werden in einer Eingangsschaltung 4 empfangen. Das Fahrassistenzsystem 1 kann weiterhin Kommunikationsschnittstellen aufweisen und mit einer GPS-Einrichtung funktionell zusammenwirken, was nicht dargestellt ist. Die Eingangsschaltung 4 ist mit einem Bussystem 5 zum Datenaustausch mit einer Datenverarbeitungseinrichtung 6 verbunden. Die Datenverarbeitungseinrichtung 6 ist mit einem weiteren 7 oder demselben 5 Bussystem mit einer Ausgangsschaltung 8 verbunden. Über die Ausgangschaltung 8 können beispielsweise Signalisationselemente 10 angesteuert werden, sowie Einrichtungen 11 zur Querführung und Einrichtungen 12 zur Längsführung des Fahrzeugs.

Die Datenverarbeitungseinrichtung 6 umfasst ein Modul 13 zur Ermittlung von Objekten aus den Signalen und/oder Daten der Umgebungserfassungseinrichtung 2. Dabei werden beispielsweise für zumindest zwei Sende-/Empfangseinheiten des Umfelderfassungssystems 2 für die empfangenen Signale Signallaufzeiten ermittelt und unter Verwendung der ermittelten Signallaufzeiten Abstände der Sende-/Empfangseinheiten zu Reflexionsquellen ermittelt, welche sich in einem Erfassungsbereich der Sende-/Empfangseinheiten befinden. Der Abstand zwischen der Sende-/Empfangseinheit und der Reflexionsquelle errechnet sich über die gemessene Echolaufzeit und die Schallgeschwindigkeit. Bei Systemen, welche mehrere Sende-/Empfangseinheiten aufweisen, wird bevorzugt auch die Winkelinformation über die Objekte extrahiert, so dass das Objekt im Raum lokalisiert werden kann. Um die Winkelinformation zu extrahieren, können beispielsweise mehrere Sende-/Empfangseinheiten zu einem System kombiniert und die Laufzeitunterschiede des reflektierten Signals zu den Sensoren genutzt werden, was auch als Trilateration bezeichnet wird. Befindet sich nur ein Objekt im Blickfeld der Sende-/Empfangseinheiten, so ist mit Hilfe der Trilateration eine exakte Lokalisierung der Position des Objekts möglich. Die Ermittlung der Relativgeschwindigkeiten erfolgt beispielsweise durch eine Analyse einer Dopplerverschiebung in den Empfangswellenpulsen.

Das Modul 13 zur Ermittlung von Objekten legt bei ermittelten Objekten ein virtuelles Objekt an und ordnet dem virtuellen Objekt die ermittelten Koordinaten, gegebenenfalls eine Relativgeschwindigkeit, Bewegungsvektoren oder prädizierte Trajektorien sowie weitere Eigenschaften, wie etwa eine TTC, eine Aussage darüber, ob das Objekt ein bewegliches oder ein statisches Objekt ist, zu. Das Modul 13 zur Ermittlung von Objekten legt diese virtuellen Objekte lediglich dann an, wenn ein Objekt oberhalb einer Schwellwertkurve im Ausgangssignal der Umgebungserfassungseinrichtung 2 detektiert wurde.

Die Datenverarbeitungseinrichtung 6 umfasst außerdem ein Modul 14 zur Plausibilisierung von ermittelten Objekten. Das Modul 14 zur Plausibilisierung von Objekten verarbeitet insbesondere Daten des Moduls 13 zur Ermittlung von Objekten und kann in einigen Ausführungsformen der Erfindung die Umgebungserfassungseinrichtung 2 ansteuern, beispielsweise um Signale in Richtung von ermittelten Objekten auszusenden, um diese genauer zu lokalisieren. Die Plausibilisierung kann über mehrere Zyklen erfolgen und/oder über gezielt Abgabe von Wellenpulsen. Wenn ein Objekt über mehrere Messzyklen erfasst wurde, kann dem Objekt auch ein Bewegungsvektor und eine prädizierte Trajektorie zugeordnet werden, sowie gegebenenfalls Eigenschaften wie eine errechnete Zeit bis zu einer bevorstehenden Kollision mit dem Fahrzeug, eine so genannte TTC (time to collision), oder auch ob das Objekt selbst beweglich ist, oder statisch.

Das Modul 13 zur Ermittlung von Objekten und das Modul 14 zur Plausibilisierung sind Module eines Parkassistenten 15.

Die Datenverarbeitungseinrichtung 6 umfasst weiterhin ein Modul 16 zur Totwinkelüberwachung. Das Modul 16 zur Totwinkelüberwachung verarbeitet insbesondere Daten des Moduls 13 zur Ermittlung von Objekten und/oder Daten des Moduls 14 zur Plausibilisierung von Objekten. Das Modul 16 zur Totwinkelüberwachung wertet die Informationen dahingehend aus, dass bei einem ermittelten Objekt überprüft wird, ob es sich in einem toten Winkel befindet. Wenn sich das ermittelte Objekt in einem toten Winkel befindet, steuert das Modul 16 zur Totwinkelüberwachung über die Ausgangsschaltung 8 Reaktionseinheiten an, insbesondere die Signalisationselemente 10, sowie gegebenenfalls Einrichtungen 11 zur Querführung und Einrichtungen 12 zur Längsführung des Fahrzeugs, falls ein automatischer Eingriff erfolgen kann.

Das Modul 16 zur Totwinkelüberwachung verarbeitet außerdem Daten der Fahrzeugdatensensorik 3. Die Ansteuerung der Reaktionseinheiten kann von einer Information über den Lenkwinkel oder über eine Änderung des Lenkwinkels des Fahrzeugs abhängig sein, welche durch die Fahrzeugdatensensorik 3 bereitgestellt wird.

Die Datenverarbeitungseinrichtung 6 umfasst ein weiteres Modul 17 zur Ermittlung von Objekten, welches einem komplementären Totwinkelüberwachungssystem 18 zuordenbar ist. Das weitere Modul 17 zur Ermittlung von Objekten arbeitet unter Systemparametern, welche sich von den Systemparametern des Parkassistenzsystems 15 unterscheiden. Das weitere Modul 17 zur Ermittlung von Objekten verwendet eine Schwellwertkurve, welche eine Rauschunterdrückung bereitstellt. Es erzeugt eigene virtuelle Objekte, welche Eigenschaften wie Koordinaten, Relativgeschwindigkeiten, Bewegungsvektoren und prädizierte Trajektorien aufweisen können. In alternativen, kostengünstigen Ausführungsformen ermittelt das weitere Modul 17 zur Ermittlung von Objekten lediglich Koordinaten der Objekte.

Das Modul 16 zur Totwinkelüberwachung empfängt vom Parkassistenzsystem 15 ein Signal, ob das Parkassistenzsystem 15 aktiv ist oder nicht. In dem Fall, wenn das Parkassistenzsystem 15 nicht aktiv ist, aktiviert das Modul 16 zur Totwinkelüberwachung das komplementäre Totwinkelüberwachungssystem 18. Das komplementäre Totwinkelüberwachungssystem 18 ist dann aktiv, wenn das Parkassistenzsystem 15 nicht aktiv ist.

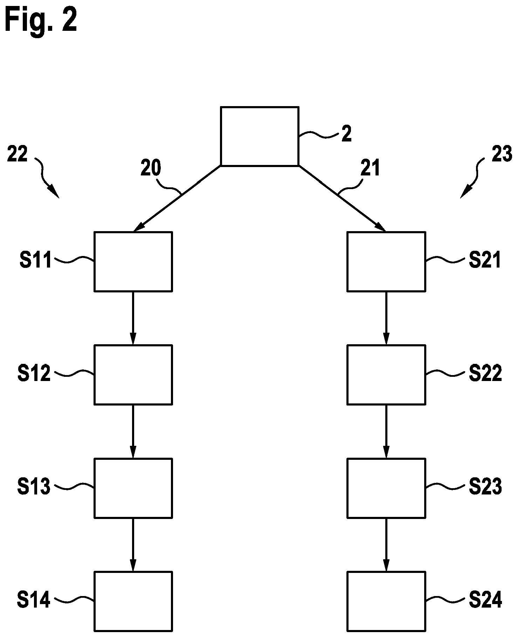

Fig. 2 zeigt ein Flussdiagramm mit einer Datenverarbeitung aus dem Stand der Technik. Signale, welche von einer Umgebungserfassungseinrichtung 2 bereitgestellt werden, werden in einem ersten Flusszweig 20 von einem Totwinkelüberwachungssystem 22 verarbeitet und in einem zweiten Flusszweig 21 von einem Parkassistenzsystem 23 verarbeitet.

In einem ersten Schritt S11 wird in dem ersten Flusszweig 20 ein Signal dann in ein Digitalsignal umgewandelt, wenn ein Signalpegel oberhalb einer Schwellwertkurve liegt, welcher für das Totwinkelüberwachungssystem 22 festgelegt ist. Außerdem werden digitale Abstandswerte generiert. In einem zweiten Schritt S12 wird für das Totwinkelüberwachungssystem 22 ein Objekt generiert. In einem dritten Schritt S13 wird von einer Entscheidungslogik entschieden, ob sich das detektierte Objekt in einem toten Winkel befindet oder nicht. In einem vierten Schritt S14 wird eine Aktion ausgelöst, beispielsweise über eine Schnittstelle des Totwinkelüberwachungssystems 22 an den Fahrer des Fahrzeugs.

Im zweiten Flusszweig 21 wird in einem ersten Schritt S21 ein empfangenes Signal in ein Digitalsignal umgewandelt, wenn das Signal oberhalb der Schwellwertkurve liegt. Außerdem werden digitale Abstandswerte generiert. In einem zweiten Schritt S22 wird ein Objekt für das Parkassistenzsystem erzeugt. In einem dritten Schritt S23 wird eine Abstandsinformation für das Objekt erzeugt. In einem vierten Schritt S24 wird eine Reaktion ausgelöst, beispielsweise über eine Schnittstelle des Parkassistenzsystems 23 an den Fahrer.

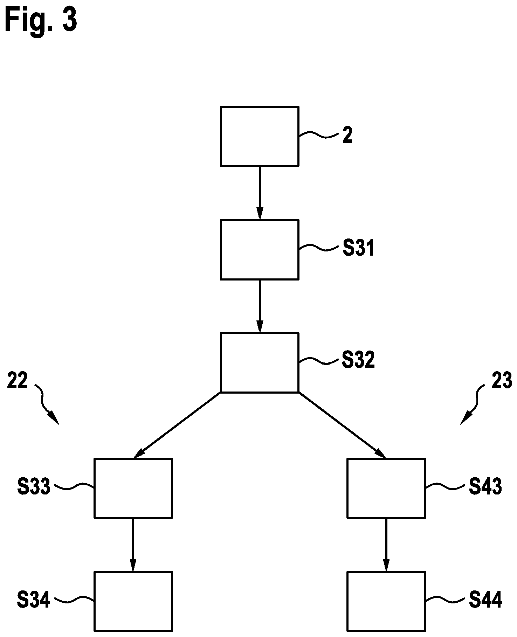

Fig. 3 zeigt ein Flussdiagramm einer erfindungsgemäßen Datenverarbeitung. Bei den beiden Signalzweigen 21, 22, welche mit Bezug auf Fig. 2 beschrieben wurden, fallen die jeweils ersten beiden Schritte zusammen. In einem ersten Schritt S31 wird ein von der Umgebungserfassungseinrichtung 2 bereitgestelltes Analogsignal in ein Digitalsignal umgewandelt, wenn das Signal oberhalb einer Schwellwertkurve für das Parkassistenzsystem liegt, und digitale Abstandswerte generiert. In einem zweiten Schritt S32 wird für das Parkassistenzsystem ein Objekt erzeugt.

Das Totwinkelüberwachungssystem 22 arbeitet basierend auf diesen Objekten ebenso wie das Parkassistenzsystem 23. So wird in einem dritten Schritt S33 mittels einer Entscheidungslogik entschieden, ob sich das Objekt in einem toten Winkel befindet oder nicht. In einem vierten Schritt S34 wird eine Aktion ausgelöst. Für das Parkassistenzsystem 23 wird in einem dritten Schritt S43 eine Abstandsinformation erzeugt. In einem vierten Schritt S44 wird die Abstandsinformation gegebenenfalls zur Auslösung einer Aktion genutzt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Überwachung eines toten Winkels eines Fahrzeugs, wobei ein Parkassistenzsystem (15) mittels einer Umgebungserfassungseinrichtung (2) eine Umgebung des Fahrzeugs erfasst (S31) und in der erfassten Umgebung Objekte ermittelt werden (S32), wobei
ein in der erfassten Umgebung ermitteltes Objekt einem virtuellen Objekt zugeordnet wird, und wobei
bei einem ermittelten Objekt überprüft wird, ob es sich in einem toten Winkel befindet (S33), und eine Aktion ausgelöst wird, wenn sich das ermittelte Objekt in dem toten Winkel befindet (S34), wobei
bei der Ermittlung der Objekte eine Schwellwertkurve verwendet wird, welche eine Bodenechosignalunterdrückung bereitstellt, wobei
das Parkassistenzsystem (15) unterhalb einer bestimmten Geschwindigkeit aktiv und oberhalb der bestimmten Geschwindigkeit inaktiv ist, so dass unterhalb der bestimmten Geschwindigkeit die Totwinkelüberwachung und die Parkassistenz stattfinden, und wobei ein komplementäres Totwinkelüberwachungssystem (18) dann aktiv ist, wenn das Parkassistenzsystem (15) inaktiv ist, so dass eine Totwinkelüberwachung ständig stattfindet, wobei
bei dem komplementären Totwinkelüberwachungssystem (18) eine Schwellwertkurve bei der Ermittlung der Objekte verwendet wird, die eine effektive Rauschunterdrückung bereitstellt.

2. Verfahren nach Anspruch 1, **dadurch gekennzeichnet, dass** die Aktion dann ausgelöst wird, wenn zusätzlich eine Lenkbewegung des Fahrzeugs in Richtung auf das im toten Winkel befindliche Objekt erfolgt.

3. Computerprogramm zur Durchführung eines der Verfahren nach einem der Ansprüche 1 bis 2, wenn das Computerprogramm auf einer programmierbaren Computereinrichtung ausgeführt wird.

4. Fahrassistenzsystem (1), das zur Ausführung eines der Verfahren nach einem der Ansprüche 1 oder 2 eingerichtet ist, aufweisend:
- ein Parkassistenzsystem (15), welches mittels einer Umgebungserfassungseinrichtung (2) eine Umgebung des Fahrzeugs erfasst,
- ein Modul (13) zur Ermittlung von Objekten, welches bei ermittelten Objekten ein virtuelles Objekt anlegt,
- ein Modul (16) zur Totwinkelüberwachung, welches eingerichtet ist, bei einem vom Parkassistenzsystem (15) erfassten Objekt zu überprüfen, ob es sich in einem toten Winkel befindet und eine Aktion auszulösen, wenn sich das ermittelte Objekt in dem toten Winkel befindet,
- ein komplementäres Totwinkelüberwachungssystem (18),
- ein Modul (17) zur Ermittlung von Objekten, welches dem komplementären Totwinkelüberwachungssystem (18) zuordenbar ist.

5. Fahrassistenzsystem (1) nach Anspruch 4, weiterhin aufweisend ein Seitenraumüberwachungssystem.

## Claims

1. Method for monitoring a blind spot of a vehicle, wherein a parking assistance system (15) senses (S31) surroundings of the vehicle by means of a surroundings-sensing device (2), and objects are determined (S32) in the sensed surroundings, wherein
an object which is determined in the sensed surroundings is assigned to a virtual object,
and wherein
when an object is determined it is checked whether it is located (S33) in a blind spot, and an action is triggered if the determined object is located (S34) in the blind spot, wherein
when the objects are determined, a threshold value curve is used which provides suppression of ground echo signals, wherein
the parking assistance system (15) is active below a determined speed and inactive above the determined speed, so that the monitoring for blind spots and the parking assistance take place below the determined speed, and wherein a complementary blind spot monitoring system (18) is active when the parking assistance system (15) is inactive, so that monitoring for blind spots takes place continuously,
wherein
in the complementary blind spot monitoring system (18) a threshold value curve is used during the determination of the objects, which curve provides effective noise suppression.

2. Method according to Claim 1, **characterized in that** the action is triggered if a steering movement of the vehicle additionally occurs in the direction of the object which is located in the blind spot.

3. Computer programme for carrying out one of the methods according to one of Claims 1 to 2 when the computer programme is run on a programmable computer device.

4. Driving assistance system (1) which is configured to carry out one of the methods according to one of Claims 1 and 2, having:
- a parking assistance system (15) which senses surroundings of the vehicle by means of a surroundings-sensing device (2),
- a module (13) for determining objects, which module applies a virtual object to determined objects,
- a module (16) for monitoring for blind spots, which module (16) is configured to check, when an object is sensed by the parking assistance system (15), whether the object is located in a blind spot and to trigger an action if the determined object is located in the blind spot,
- a complementary blind spot monitoring system (18),
- a module (17) for determining objects, which module (17) can be assigned to the complementary blind spot monitoring system (18).

5. Driving assistance system (1) according to Claim 4, also having a side space monitoring system.

## Revendications

1. Procédé permettant de surveiller un angle mort d'un véhicule, dans lequel
un système d'aide au stationnement (15) détecte au moyen d'un dispositif de détection d'environnement (2) un environnement du véhicule (S31), et des objets dans l'environnement détecté sont déterminés (S32),
un objet déterminé dans l'environnement détecté étant attribué à un objet virtuel, et dans lequel
il est vérifié pour un objet déterminé s'il se trouve dans un angle mort (S33), et une action est déclenchée si l'objet déterminé se trouve dans l'angle mort (S34),
une courbe de valeurs seuil qui fournit une suppression du signal de l'écho de sol étant utilisée lors de la détermination des objets,
le système d'aide au stationnement (15) étant actif au-dessous d'une vitesse spécifique et étant inactif au-dessus d'une vitesse spécifique de sorte qu'au-dessous de la vitesse spécifique, la surveillance d'angle mort et l'aide au stationnement sont effectuées, et un système de surveillance d'angle mort complémentaire (18) étant actif lorsque le système d'aide au stationnement (15) est inactif de sorte qu'une surveillance d'angle mort est effectuée en permanence, dans lequel
sur le système de surveillance d'angle mort complémentaire (18), une courbe de valeurs seuil qui fournit une suppression de bruit efficace est utilisée lors de la détermination des objets.

2. Procédé selon la revendication 1, **caractérisé en ce que** l'action est déclenchée lorsqu'en plus un mouvement de braquage du véhicule a lieu en direction de l'objet se trouvant dans l'angle mort.

3. Programme informatique pour exécuter l'un des procédés selon l'une des revendications 1 à 2 si le programme informatique est exécuté sur un dispositif informatique programmable.

4. Système d'aide à la conduite (1), qui est aménagé pour exécuter l'un des procédés selon l'une des revendications 1 et 2, présentant :
- un système d'aide au stationnement (15) qui détecte un environnement du véhicule au moyen d'un dispositif de détection d'environnement (2),
- un module (13) pour déterminer des objets, qui crée un objet virtuel si des objets sont déterminés,
- un module (16) pour la surveillance d'angle mort qui est aménagé pour vérifier pour un objet détecté par le système d'aide au stationnement (15) s'il se trouve dans un angle mort et pour déclencher une action si l'objet déterminé se trouve dans l'angle mort,
- un système de surveillance d'angle mort complémentaire (18),
- un module (17) de détermination d'objets qui peut être associé au système de surveillance d'angle mort complémentaire (18).

5. Système d'aide à la conduite (1) selon la revendication 4, présentant en outre un système de surveillance d'espace latéral.
